# EUROPÄISCHE PATENTSCHRIFT

(11) **EP 2 028 060 B1**
(45) Veröffentlichungstag und Bekanntmachung des Hinweises auf die Patenterteilung: **22.01.2014**
(21) Anmeldenummer: 08012741.8
(22) Anmeldetag: 15.07.2008
(51) Int. Cl.: F16H 63/42, B60R 16/023

(54) **Kraftfahrzeug mit einer Anzeige von Energiesparinformationen**
Motor vehicle with a display of energy efficiency information
Véhicule automobile doté d'un affichage d'informations sur les économies d'énergie

(30) Priorität: 24.08.2007 DE 202007011919 U
(43) Veröffentlichungstag der Anmeldung: 25.02.2009
(73) Patentinhaber: Audi AG, 85045 Ingolstadt (DE)
(72) Erfinder: Burgert, Sascha, 85088 Vohburg (DE); Apel, Frank, 85055 Ingolstadt (DE); Ecard, Karl Bernhard, 89077 Ulm (DE)
(74) Vertreter: Thielmann, Frank

(56) Entgegenhaltungen:
- WO-A-2005/109273
- DE-A1-102004 021 943
- DE-B3-102005 045 891
- FR-A- 2 466 811
- US-A1- 2006 111 836

## Beschreibung

Die Erfindung betrifft ein Kraftfahrzeug umfassend ein Energie verbrauchendes Antriebsaggregat, verschiedenartige Betriebskomponenten, von denen Betriebsparameter über einen Fahrzeugbus erfassbar sind, sowie eine den momentanen Energieverbrauch ermittelnde Steuerungseinrichtung, wobei seitens der Steuerungseinrichtung in Abhängigkeit eines oder mehrerer Betriebskomponenten oder mehrerer Betriebsparameter einer oder mehrerer Betriebskomponenten wenigstens eine vom Fahrer durchführbare Handlung zur Bedienung wenigstens einer Betriebskomponente, die zur Reduzierung des Energieverbrauchs geeignet ist, ermittelbar und mittels einer Wiedergabeeinrichtung ausgebbar ist.

Moderne Kraftfahrzeuge bieten dem Fahrer die Möglichkeit, den aktuellen Kraftstoffverbrauch zu ermitteln und angezeigt zu bekommen. Üblicherweise wird dem Fahrer hierzu an einer Wiedergabeeinrichtung wie einem im Kombiinstrument befindlichen Display der momentane Verbrauch in l/100 km angezeigt. Für den Fahrer stellt dies eine Information dar, anhand der er zumindest dem Grunde nach erkennt, ob er im Moment viel oder wenig Kraftstoff verbraucht. Wird ihm ein hoher Kraftstoffverbrauch angezeigt, so ist der Fahrer jedoch auf sich allein gestellt, Gegenmaßnahmen zu suchen und einzuleiten, um den Kraftstoffverbrauch zu reduzieren, wenn er dies wünscht. Dies scheitert jedoch häufig daran, dass dem Fahrer außer einer Verringerung der Geschwindigkeit zur Verbrauchsreduzierung ansonsten keine geeigneten Maßnahmen bekannt sind, die in der gegebenen Situation zu einer verbrauchsoptimierten Fahrweise führen würden. Das Antriebsaggregat kann ein Verbrennungsmotor sein, der Benzin oder Dieselkraftstoff verbraucht, also eine Brennkraftmaschine. Vergleichbare Probleme sind aber auch bei Fahrzeugen mit anderen Antriebsaggregattypen, z. B. einem Elektromotor oder einem Wasserstoff- oder Erdgasmotor, gegeben, auch hier erhält der Fahrer keine Informationen bzgl. einer Energieverbrauchsreduzierung bzw. verbrauchsoptimierten Fahrweise.

Aus DE 10 2004 021 943 A1 ist ein Kraftfahrzeug mit einer Karosserie, einer Niveauregulierung zur Regulierung der räumlichen Ausrichtung der Karosserie im dynamischen Fahrbetrieb und einer Steuereinrichtung bekannt. Dabei ist die Karosserie von der Niveauregulierung derart ausrichtbar, dass ihr Luftwiderstand minimiert ist. Hierbei kann die Steuereinrichtung ein Signal eines Energieverbrauchsensors, insbesondere eines Kraftstoffverbrauchsensors, berücksichtigen.

EP 1 780 393 A1 betrifft eine Auswerteeinrichtung für den Kraftstoffverbrauch eines Kraftfahrzeuges, insbesondere eines Lastkraftwagens. Die Auswerteeinrichtung berücksichtigt eine Vielzahl an Parametern wie etwa die Fahrzeuggeschwindigkeit oder den Öffnungswinkel des Gaspedals in Abhängigkeit unterschiedlicher Fahrsituationen des Kraftfahrzeugs zur Ermitt-lung einer ein Maß für den Kraftstoffverbrauch bzw. das Fahrverhalten des Fahrers angebenden Information. Anhand dieser Information kann eine eine bestimmte Maßnahme zur Kraftstoffeinsparung betreffende Handlungsanweisung erstellt und über eine Anzeigeeinrichtung einem Fahrer als Hinweis ausgegeben werden.

Der Erfindung liegt das Problem zugrunde, ein Kraftfahrzeug anzugeben, das den Fahrer beim Erkennen und Einleiten möglicher verbrauchsoptimierender Handlungen unterstützt.

Zur Lösung dieses Problems ist bei einem Kraftfahrzeug der eingangs genannten Art erfindungsgemäß vorgesehen, dass dem Fahrer nach Ermittlung einer Handlungsinformation zunächst eine das Vorliegen einer solchen Handlungsinformation anzeigenden Wählinformation ausgebbar ist, woraufhin seitens des Fahrers durch Betätigung eines Auswählmittels oder über eine Spracheingabe gesteuert die Wiedergabe der Handlungsinformation wählbar ist.

Beim erfindungsgemäßen Kraftfahrzeug wird vorzugsweise kontinuierlich situationsbezogen überprüft, ob der Fahrer eine Handlung durchführen kann, die geeignet ist, den momentanen oder allgemeinen Energieverbrauch, sei es Kraftstoff oder Batteriestrom oder Gas etc., zu reduzieren, wobei diese Handlungsinformation dann an einer geeigneten Wiedergabeeinrichtung ausgegeben und dem Fahrer so zur Kenntnis gebracht wird. Zur Ermittlung der Handlungsinformation greift die Steuerungseinrichtung auf beliebige Betriebsparameter einer oder mehrerer beliebiger fahrzeugseitig vorgesehener Betriebskomponenten zurück, die ohnehin an einem im Fahrzeug vorgesehenen Signalbus, üblicherweise dem CAN-Bus, anliegen. Unterschiedlichste Betriebskomponenten können einen Einfluss auf den Kraftstoff- oder allgemein den Energieverbrauch haben, wobei als Betriebskomponente jedwedes am Kraftfahrzeug verbautes und vom Fahrer beeinflussbares Element zu verstehen ist, beispielsweise das Antriebsaggregat, das Bremssystem, Fenster oder Schiebedach, Klimaanlage, Standheizung, Reifen etc. All diese Systeme können, wenn sie beispielsweise zu Zeiten, in denen sie nicht benötigt werden oder mit Betriebsparametern, die im Moment unzweckmäßig sind, betrieben werden, nachteilig für den Energieverbrauch sein, beispielsweise eine uneffizient eingestellte Klimaanlage oder der Betrieb einer Sitzheizung. Auch geöffnete Fenster oder ein geöffnetes Schiebedach bei höherer Fahrgeschwindigkeit und die daraus resultierenden ungünstigen Luftwiderstandseigenschaften wirken sich Kraftstoff erhöhend aus, wie natürlich auch das Beschleunigungs- oder Bremsverhalten oder auch ein zu niedriger Luftdruck in den Reifen.

Anhand entsprechender Betriebsparameter (z. B. Fenster- oder Schiebedachstellung, Klimaanlageneinstellung, Reifenluftdruck, Einstellung der Luftfederung, Fahr- und Bremspedalbetätigung, etc.), die auch retrospektiv in die Ermittlung eingehen, kann nun die Steuerungseinrichtung eine oder mehrere Handlungsinformationen ermitteln, die dem Fahrer eine oder mehrere geeignete Handlungen vorschlagen, die zur Reduzierung des momentanen Kraftstoffverbrauchs geeignet sind, oder die allgemein zu einer Reduzierung des Verbrauchs führen. Diese vorgeschlagene Handlung kann eine solche sein, die sofort durchgeführt werden kann (beispielsweise die Änderung der Klimaanlageneinstellung oder der Luftfederung zum weiteren Absenken des Fahrzeugs oder das Schließen von Fenstern), oder die erst später durchzuführen sind, wie beispielsweise die Einstellung des Reifenluftdrucks auf die herstellerseitig empfohlenen Werte.

In jedem Fall erhält der Fahrer also beim erfindungsgemäßen Kraftfahrzeug einen tatsächlichen Handlungsvorschlag zur Durchführung einer den Kraftstoffverbrauch reduzierenden Maßnahme und nicht nur wie bisher im Stand der Technik üblich eine bloße Anzeige des momentanen Energieverbrauchs. Das System unterstützt also den Fahrer durch die Wiedergabe von Energiesparhinweisen im Hinblick auf eine möglichst verbrauchsoptimierte Fahrweise durch Auswertung von Betriebsparametern. Der Fahrer erhält so die Information über unterschiedlichste Handlungen, die verbrauchsoptimierend sind, wenn sie ergriffen werden, wobei es sich dabei zumeist um Handlungen handelt, die der Fahrer von sich aus gerade nicht als verbrauchsreduzierend erkennt. Der Fahrer ist also, anders als im Stand der Technik, nicht mehr "allein gelassen", wenn es darum geht, eine Kraftstoff sparende Fahrweise zu finden, vielmehr erhält er beim erfindungsgemäßen Kraftfahrzeug eine aktive Unterstützung durch die situationsbezogene Ermittlung der Handlungsinformationen. Im folgenden wird allgemein von "Kraftstoffverbrauch" geschrieben, worunter aber ein Energieverbrauch in jedweder Form zu verstehen ist.

Um dem Fahrer eine Wahlmöglichkeit zu geben, ob er eine ermittelte Handlungsinformation zur Kenntnis nehmen möchte oder nicht, ist es vorgesehen, dem Fahrer nach Ermittlung einer Handlungsinformation zunächst eine das Vorliegen einer solchen Handlungsinformation anzeigenden Wählinformation auszugeben, woraufhin seitens des Fahrers durch Betätigung eines Auswählmittels oder über eine Spracheingabe gesteuert die Wiedergabe der Handlungsinformation wählbar ist. Das heißt, dass dem Fahrer die Handlungsinformation nicht sofort nach ihrer Ermittlung wiedergegeben wird, vielmehr wird ihm lediglich eine Information hinsichtlich des Vorliegens einer solchen Handlungsinformation gegeben, woraufhin der Fahrer dann selbst entscheiden kann, ob er von der Handlungsinformation Kenntnis nehmen möchte oder nicht. Alternativ ist auch eine sofortige, direkte Anzeige möglich. Die Wählinformation wird bevorzugt an einem Display, also optisch ausgegeben, grundsätzlich bleibt aber auch die Möglichkeit einer Sprachausgabe. Die Anwahl der Wiedergabe der Handlungsinformation erfolgt dann beispielsweise über ein lenkradseitig oder einer am Lenkstockhebel oder dergleichen vorgesehenes Bedienelement, beispielsweise eine speziell hierfür vorgesehene Taste oder eine Taste, die nach Vorliegen einer Wählinformation in ihrer Funktionalität zum Anwählen der dahinter liegenden Handlungsinformation entsprechend konfiguriert wird.

Die Handlungsinformation und gegebenenfalls auch die Wählinformation kann entweder als Textinformation an einem Anzeigefeld dargestellt oder mittels eines head-up-Displays an die Windschutzscheibe projiziert werden. Es erfolgt hier also eine optische Darstellung. Als Anzeigefeld kann beispielsweise im Kombiinstrument befindliches Display verwendet werden oder, wie bei modernen Kraftfahrzeugen oftmals vorgesehen, ein entsprechend großes Informationsdisplay, wie es üblicherweise im Bereich der Mitte des Armaturenbretts vorgesehen ist. Alternativ hierzu kann auch eine Ausgabe in Form einer Sprachinformation über eine Sprachwiedergabeeinrichtung vorgesehen sein, wobei man sich hierfür zweckmäßigerweise des ohnehin fahrzeugseitig verbauten Lautsprechersystems bedient.

Nachdem die üblicherweise ermittelten Handlungsinformationen, die bezogen auf momentane Ist-Betriebsparameter ermittelt werden, zumeist nur eine relativ kurze "Gültigkeitsdauer" besitzen, nachdem sich die Situation relativ schnell wieder ändern kann, ist zweckmäßigerweise ferner vorgesehen, dass nach Ablauf einer vorbestimmten oder in Abhängigkeit des oder der Betriebsparameter, die der Ermittlung der Handlungsinformation zugrunde lagen, ermittelten Zeit ab Ermittlung der Handlungsinformation die als Textinformation wiedergegebene Wählinformation erlischt. Hierüber wird sichergestellt, dass dem Fahrer keine "veralteten" Handlungsinformationen wiedergegeben werden, die bezogen auf die nunmehr gegebene Ist-Situation nicht mehr passend sind.

Eine zweckmäßige Weiterbildung der Erfindung sieht vor, dass eine neu ermittelte Handlungsinformation, die einer innerhalb eines vorbestimmten Zeitintervalls oder in Abhängigkeit gleicher Betriebsparameter ermittelten und wiedergegebenen früheren Handlungsinformation entspricht, nicht ausgegeben wird. Hierüber wird vermieden, dass eine vom Fahrer bereits wahrgenommene Handlungsinformation nicht nochmals ausgegeben wird, auch wenn der Fahrer nach der erstmaligen Kenntnisnahme der Handlungsinformation hierauf nicht reagiert hat und sich gegebenenfalls die Betriebsparameter, die der Handlungsinformationsermittlung zugrunde lagen, deshalb auch nicht geändert haben. Denn der Umstand, dass der Fahrer auf die erste Handlungsinformation nicht reagiert hat, legt nahe, dass er auch der später gegebenen gleichen Handlungsinformation nicht folgen wird, weshalb sich deren Ausgabe dann nicht anbietet.

Schließlich kann die Steuerungseinrichtung noch zur Ermittlung und Ausgabe der durch Vornahme der vorgeschlagenen Bedienung einsparbaren Kraftstoffmenge ausgebildet sein, sofern dies im einen oder anderen Fall bezogen auf die jeweilige Handlungsinformation zweckmäßig ist.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Kraftfahr- zeugs und der Systemarchitektur zur Ermittlung und Ausgabe von Handlungsinformationen,
- Fig. 2: ein Beispiel einer Anzeige einer Wählinformation, und
- Fig. 3a - 3d: vier verschiedene Beispiele für Ausgaben von Handlungsinfor- mationen.

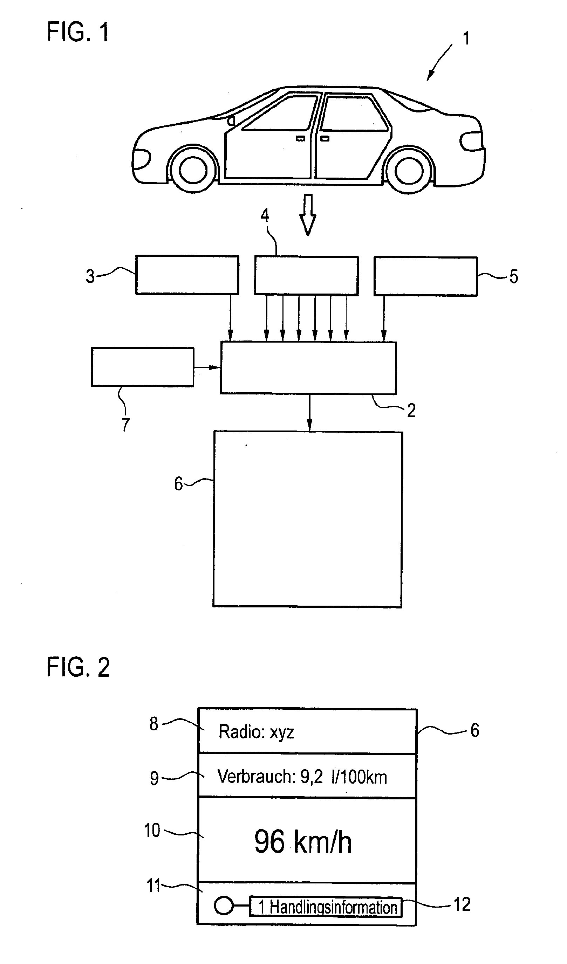

Fig. 1 zeigt ein erfindungsgemäßes Kraftfahrzeug 1, dessen zentrale Systemkomponenten in vergrößerter separater Darstellung gezeigt sind. Vorgesehen ist eine Steuerungseinrichtung 2, die der Ermittlung von situationsbezogenen Handlungsinformationen betreffend die Vornahme einer Handlung bzw. Bedienung einer beliebigen Betriebskomponente des Fahrzeugs dient, welche Handlungsinformation zur Reduzierung des Kraftstoffverbrauchs geeignet ist. Zu diesem Zweck werden seitens der Steuerungseinrichtung beliebige Betriebsparameter unterschiedlichster Betriebskomponenten des Fahrzeugs 1 aufgenommen, wobei als Betriebskomponente jedwedes System, Steuergerät, Sensor etc. zu verstehen ist. Exemplarisch ist ein Navigationsgerät 3 dargestellt, ferner eine beliebige Anzahl an Sensoren und Datenerfassungselemente 4, die fahrzeugseitig verbaut sind, sowie ein Kombiinstrument 5. Alle diese Betriebskomponenten liefern Daten bzw. verfügen über Daten, die seitens der Steuerungseinrichtung 2 über das fahrzeugseitige Bus-System, üblicherweise den CAN-Bus, erfasst und verarbeitet werden. Ergibt sich anhand der verarbeiteten Betriebsparameter eine Situation, die durch Vornahme einer Handlung verbrauchstechnisch verbessert werden kann, so ermittelt die Steuerungseinrichtung 2 eine solche Handlungsinformation.

Mit Ermittlung einer solchen Handlungsinformation wird seitens der Steuerungseinrichtung 2 zunächst an einer Anzeigeeinrichtung 6, beispielsweise einem im Kombiinstrument 5 befindlichen Display oder einem anderen am Armaturenbrett befindlichen Display, eine Wählinformation gegeben, die dem Fahrer das Vorhandensein einer ermittelten Handlungsinformation anzeigt. Der Fahrer kann nun selbst entscheiden, ob er diese Handlungsinformation zur Kenntnis nehmen möchte oder nicht. Möchte er sie ansehen, so wählt er über ein Bedienelement 7, beispielsweise eine am Lenkrad befindliche Taste oder ein Scrollrad, die Wählinformation an, bestätigt diese, und erhält hieraufhin die beispielsweise als Textausgabe konzipierte Handlungsinformation an der Anzeigeeinrichtung 6 dargestellt. Die Darstellung an der Anzeigeeinrichtung 6 ist grundsätzlich als Menüstruktur konzipiert. An der Anzeigeeinrichtung 6 sind beispielsweise über das Bedienelement 7 unterschiedliche einzelne Menüpunkte anzuwählen, wie beispielsweise der Bordcomputer, ein Menü betreffend Verbrauchsinformationen zu spezifischen Energieverbrauchern, etc., und unter anderem auch die Zuschaltung eines Menüs, das der Ermittlung von Handlungsinformationen zugeordnet ist, über das also dieses System zu- oder abgeschaltet werden kann.

Fig. 2 zeigt exemplarisch eine Darstellung der Wählinformation an der Anzeigeeinrichtung 6. An dieser beispielsweise als farbiges LCD-Display ausgebildeten Anzeigeeinrichtung 6 ist in einem oberen Feld 8 der eingestellte Radiosender angezeigt. Im darunter folgenden Feld 9 ist der aktuelle Verbrauch, hierzu 9,2 l/100 km, angegeben. Im folgenden Feld 10 ist, weil zuvor vom Fahrer eingestellt, der digitale Tachometer wiedergegeben. Im Feld 11 erfolgt die Ausgabe der Wählinformation 12, wonach eine Handlungsinformation vorliegt. Der Fahrer kann nun über das Bedienelement 7 das Feld 11 und damit die Wählinformation 12 anwählen und durch Betätigen des Bedienelements 7 die Wiedergabe der hinterlegten Handlungsinformation an der Anzeigeeinrichtung 6 veranlassen. Alternativ kann die Anzeige auch ohne Aktion des Fahrers unmittelbar angezeigt werden, d.h. der Fahrer muss dann nicht aktiv anwählen.

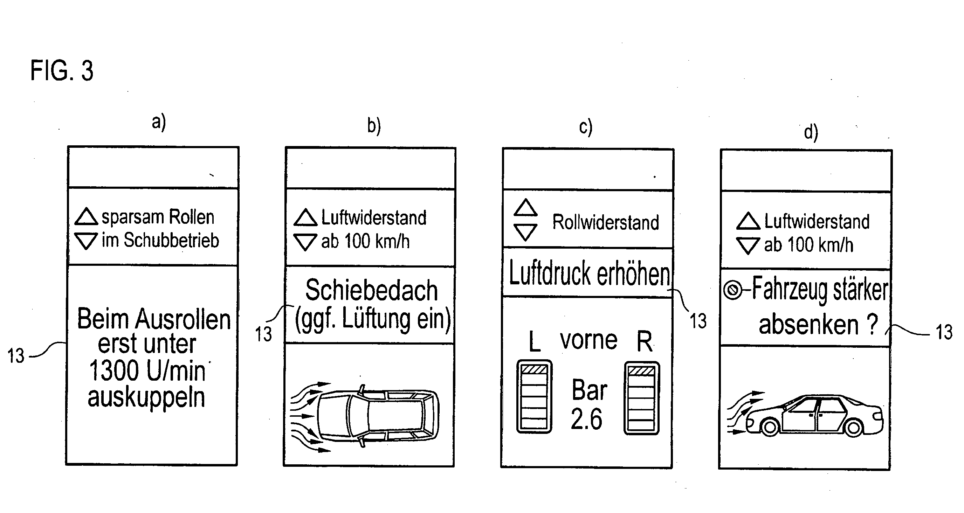

Fig. 3 zeigt vier verschiedene Ausführungsbeispiele für unterschiedliche Handlungsinformation, wobei diese keinesfalls abschließend sind.

In Fig. 3a ist als Handlungsinformation 13 wiedergegeben, dass der Fahrer beim Ausrollen erst unterhalb einer Motordrehzahl von 1300 U/min auskuppeln soll, also das Kupplungspedal betätigen soll, um möglichst sparsam und lange im Schubbetrieb zu rollen. Der Ermittlung dieser Handlungsinformation 13 liegt beispielsweise zugrunde, dass der Fahrer zuvor entweder bereits ein- oder mehrmals sehr frühzeitig nach Übergang in den Schubbetrieb ausgekuppelt hat, oder dass er dies gerade das erste mal getan hat, wobei entsprechende Betriebsparameter über die entsprechenden eingebundenen Steuergeräte respektive Sensoren diesbezüglich ohne weiteres erfasst und verarbeitet werden können.

Fig. 3b zeigt als Handlungsinformation 13, in diesem Fall das Schiebedach ab einer Geschwindigkeit von 100 km/h zu schließen, wobei eine entsprechende Information selbstverständlich auch zum Fensterschließen ausgegeben werden kann. Dieser Handlungsinformation 13 liegen zum einen Betriebsparameter betreffend den Öffnungszustand des Schiebedachs zugrunde, zum anderen Geschwindigkeitsinformationen. Die Steuerungseinrichtung 2 ermittelt nun, dass die Geschwindigkeit von 100 km/h überschritten ist, gleichwohl das Schiebedach aber noch offen ist, was nachteilig für den Kraftstoffverbrauch ist, weshalb die Handlungsinformation 13 ermittelt und ausgegeben wird.

Fig. 3c gibt dem Fahrer als Handlungsinformation 13 an, den Luftdruck in den beiden Vorderreifen links und rechts zu erhöhen. Die Betriebsparameter, nämlich der jeweilige Reifenluftdruck, wird über geeignete Reifensensoren erfasst. Dem Fahrer wird zugleich eine Information über den korrekten, herstellerseitig vorgegeben Luftdruck angegeben, den der Fahrer bei seinem nächsten Halt einstellen sollte.

Fig. 3d gibt schließlich als Handlungsinformation 13 an, das Fahrzeug ab einer Geschwindigkeit von 100 km/h etwas stärker mittels des pneumatischen Luftfederungssystems abzusenken, um den Luftwiderstand zu verringern. Hier wird die Handlungsinformation "Fahrzeug stärker absenken?" zugleich mit einer Anwahlmöglichkeit verbunden, wenn der Fahrer dies möchte. Er gelangt dann, wenn er über das Bedienelement 7 diese Anwahloption wählt, zugleich in das Bedienmenü für die pneumatische Luftfederung, um die Absenkung vorzunehmen.

Die gezeigten Ausführungsbeispiele der Fig. 3a - 3d sind lediglich Beispiele, sie sind keinesfalls abschließend, beliebige andere Handlungsinformationen sind denkbar, beispielsweise eine Information zum Abschalten einer gegebenenfalls versehentlich eingeschalteten Standheizung oder zur Einstellung einer bestimmten Klimaanlagentemperatur etc.

Wie beschrieben hat der Fahrer die Möglichkeit, sich durch Anwählen der Wählinformation 12 die Handlungsinformation 13 anzeigen zu lassen, wenn er dies wünscht, sofern keine direkte, anwahlfreie Anzeige implementiert ist. Die Wählinformation 12 erlischt nach Ablauf einer vorbestimmten Zeit, wenn der Fahrer die Wählinformation 12 nicht anwählt. Gleichermaßen wird eine bereits wiedergegebene Handlungsinformation 13 nicht ein zweites mal ausgegeben, wenn der Fahrer nach Kenntnisnahme der Handlungsinformation 13 keine entsprechende Handlung durchführt, auch wenn sich die Betriebsparameter seither nicht geändert haben. Wird beispielsweise als Handlungsinformation 13 angegeben, den Reifenluftdruck zu erhöhen, und hat der Fahrer dies wahrgenommen, so wird ihm diese Information bei Fortsetzung der begonnenen Fahrt nicht nochmals gegeben. Gegebenenfalls wird sie erst wiederholt, wenn der Fahrer das Fahrzeug erneut in Betrieb nimmt.

Insgesamt lässt das erfindungsgemäße Kraftfahrzeug die Gabe situationsbezogener Handlungsinformationen, die Kraftstoff reduzierende Maßnahmen betreffen, zu, die sich der Fahrer wahlweise anzeigen lassen kann.

Eine entsprechende Anzeige ist natürlich für alle anderen Energiearten möglich, je nach dem, welcher Art das Antriebsaggregat des Fahrzeugs ist.

## Patentansprüche

1. Kraftfahrzeug umfassend ein Energie verbrauchendes Antriebsaggregat, verschiedenartige Betriebskomponenten, von denen Betriebsparameter über einen Fahrzeugbus erfassbar sind, sowie eine den momentanen Energieverbrauch ermittelnde Steuerungseinrichtung, wobei seitens der Steuerungseinrichtung in Abhängigkeit eines oder mehrerer Betriebsparameter einer oder mehrerer Betriebskomponenten wenigstens eine situationsbezogene Handlungsinformation betreffend eine vom Fahrer durchführbare Handlung zur Bedienung wenigstens einer Betriebskomponente, die zur Reduzierung des Energieverbrauchs geeignet ist, ermittelbar und mittels einer Wiedergabeeinrichtung ausgebbar ist, **dadurch gekennzeichnet,**
**dass** dem Fahrer nach Ermittlung einer Handlungsinformation (13) zunächst eine das Vorliegen einer Handlungsinformation anzeigenden Wählinformation (12) ausgebbar ist, woraufhin seitens des Fahrers durch Betätigung eines Auswählmittels (7) oder über eine Spracheingabe gesteuert die Wiedergabe der Handlungsinformation (13) wählbar ist.

2. Kraftfahrzeug nach Anspruch 1,
**dadurch gekennzeichnet,**
**dass** die Handlungsinformation (13) und auch die Wählinformation (12) als Textinformation an einem Anzeigefeld oder mittels eines head-up-Displays oder als Sprachinformation über eine Sprachwiedergabeeinrichtung wiedergebbar ist.

3. Kraftfahrzeug nach Anspruch 1 und 2,
**dadurch gekennzeichnet,**
**dass** nach Ablauf einer vorbestimmten oder in Abhängigkeit des oder der Betriebsparameter, die der Ermittlung der Handlungsinformation (13) zugrunde lagen, ermittelten Zeit ab Ermittlung der Handlungsinformation (13) die als Textinformation wiedergegebene Wählinformation (12) erlischt.

4. Kraftfahrzeug nach einem der vorangehenden Ansprüche,
**dadurch gekennzeichnet,**
**dass** eine neu ermittelte Handlungsinformation (13), die einer innerhalb eines vorbestimmten Zeitintervalls oder in Abhängigkeit gleicher Betriebsparameter ermittelten und wiedergegebenen früheren Handlungsinformation (13) entspricht, nicht ausgegeben wird.

5. Kraftfahrzeug nach einem der vorangehenden Ansprüche,
**dadurch gekennzeichnet,**
**dass** die Steuerungseinrichtung (2) zur Ermittlung und Ausgabe der durch Vornahme der vorgeschlagenen Bedienung einsparbaren Kraftstoffmenge ausgebildet ist.

## Claims

1. Motor vehicle comprising an energy-consuming drive unit, various operating components, operating parameters of which can be detected via a vehicle bus, and a control device which determines the instantaneous energy consumption, wherein on the part of the control device, on the basis of one or more operating parameters of one or more operating components, at least one item of situation-related action information relating to an action which can be performed by the driver to operate at least one operating component, which action is suitable for reducing the energy consumption, can be determined and output by means of a reproduction device, **characterised in that**,
after determination of action information (13), selection information (12) indicating the presence of action information can initially be output to the driver, whereupon the reproduction of the action information (13) can be selected in a controlled manner on the part of the driver by actuation of a selection means (7) or via a speech input.

2. Motor vehicle according to claim 1,
**characterised in that**
the action information (13) and also the selection information (12) can be reproduced as text information on a display panel or by means of a head-up display or as speech information via a speech reproduction device.

3. Motor vehicle according to claim 1 and claim 2,
**characterised in that**,
once a predetermined time, or a time determined on the basis of the operating parameter(s) from which the action information (13) was determined, has elapsed from determination of the action information (13), the selection information (12) reproduced as text information expires.

4. Motor vehicle according to any of the preceding claims,
**characterised in that**
newly determined action information (13) which corresponds to previous action information (13), determined within a predetermined time interval or on the basis of like operating parameters and reproduced, is not output.

5. Motor vehicle according to any of the preceding claims,
**characterised in that**
the control device (2) is designed to determine and output the amount of fuel which can be economised by undertaking the proposed operation.

## Revendications

1. Véhicule automobile comprenant un groupe moteur consommant de l'énergie, des éléments de fonctionnement de différents types, dont des paramètres de fonctionnement peuvent être détectés par l'intermédiaire d'un bus de véhicule, ainsi qu'un dispositif de commande déterminant la consommation d'énergie instantanée,
au moins une information d'action qui se rapporte à une situation et qui concerne une action pouvant être exécutée par le conducteur pour la commande d'au moins un élément de fonctionnement qui est susceptible de réduire la consommation d'énergie pouvant être déterminée par le dispositif de commande en fonction d'un ou plusieurs paramètres de fonctionnement d'un ou plusieurs éléments de fonctionnement et pouvant être présentée en sortie au moyen d'un dispositif de diffusion,
**caractérisé en ce que**, après la détermination d'une information d'action (13), une information de choix (12) indiquant la présence d'une information d'action peut être présentée en sortie au conducteur, à la suite de quoi la diffusion de l'information d'action (13) peut être choisie par le conducteur par l'actionnement d'un moyen de sélection (7) ou par l'intermédiaire d'une commande via une entrée vocale.

2. Véhicule automobile selon la revendication 1, **caractérisé en ce que** l'information d'action (13) et aussi l'information de choix (12) peuvent être diffusées sous forme d'information textuelle sur un écran d'affichage ou au moyen d'un affichage tête haute ou sous forme d'information vocale par l'intermédiaire d'un dispositif de diffusion vocale.

3. Véhicule automobile selon la revendication 1 et 2, **caractérisé en ce que**, après l'écoulement d'un temps, prédéfini ou déterminée en fonction du ou des paramètres de fonctionnement qui étaient à la base de la détermination de l'information d'action (13), à partir de la détermination de l'information d'action (13), l'information de choix (12) diffusée sous forme d'information textuelle disparaît.

4. Véhicule automobile selon l'une des revendications précédentes, **caractérisé en ce qu'**une information d'action (13) nouvellement déterminée qui correspond à une information d'action (13) antérieure qui a été déterminée pendant un intervalle de temps prédéterminé ou en fonction de paramètres de fonctionnement identiques et qui a été diffusée n'est pas présentée en sortie.

5. Véhicule automobile selon l'une des revendications précédentes, **caractérisé en ce que** le dispositif de commande (2) est conçu pour la détermination et la présentation en sortie de la quantité de carburant pouvant être économisée par l'exécution de la commande proposée.
